Europäisches Patentamt

European Patent Office

Office européen des brevets

(19)

(11) EP 0 738 366 B1

(12) **EUROPEAN PATENT SPECIFICATION**

(45) Date of publication and mention
of the grant of the patent:
**05.11.1997 Bulletin 1997/45**

(21) Application number: **95906951.9**

(22) Date of filing: **12.01.1995**

(51) Int Cl.6: **E21B 47/022**, G01V 3/26

(86) International application number:
**PCT/EP95/00145**

(87) International publication number:
**WO 95/19490 (20.07.1995 Gazette 1995/31)**

(54) **METHOD OF CREATING A BOREHOLE IN AN EARTH FORMATION**

VERFAHREN ZUM HERSTELLEN EINES BOHRLOCHES IN EINER ERDFORMATION

PROCEDE DE CREATION D'UN TROU DE FORAGE DANS UNE FORMATION TERRESTRE

(84) Designated Contracting States:
**DE DK FR GB NL**

(30) Priority: **13.01.1994 EP 94200074**

(43) Date of publication of application:
**23.10.1996 Bulletin 1996/43**

(73) Proprietor: **SHELL INTERNATIONALE
RESEARCH MAATSCHAPPIJ B.V.
2596 HR Den Haag (NL)**

(72) Inventors:
• **HARTMANN, Robin, Adrianus
NL-2288 GD Rijswijk (NL)**
• **MULDER, Elvira, Hendrika c/o TU Delft
NL-2628 CJ Delft (NL)**

(56) References cited:
**EP-A- 0 104 854        EP-A- 0 247 672
EP-A- 0 301 671        EP-A- 0 366 567
US-A- 4 700 142**

**Description**

The present invention relates to a method and a system for creating a borehole in an earth formation, which borehole extends in a selected direction relative to an adjacent borehole formed in the earth formation. In the industry of hydrocarbon exploration and production, drilling of two or more adjacent boreholes can be desired to increase the production of oil from one of the wellbores by injecting steam or water in the formation via the other borehole. When, for example, the production wellbore extends horizontally, it would be desirable to drill one or more injection boreholes parallel to the production wellbore at a selected distance there below. During oil production steam is injected in the formation via the injection borehole thereby reducing the oil's flow resistance through the formation and driving the oil towards the production wellbore.

US,A,4,700,142 relates to a sensor for determining the relative position of a target well and a relief well, the sensor being positioned in the relief well. The sensor detects a magnetic field induced in the casing of the target well and determines the component of said field in directions normal to the longitudinal axis of the relief well.

In US 3,725,777 a method for determining distance and direction to a cased borehole using magnetic field measurements made from an adjacent borehole is shown. For example in the case of attacking a blowout or drilling multiple wells from a single offshore platform it may be desirable to know the exact location of an existing well. Such an existing well or borehole is assumed to have a regular periodicity in the casing magnetization. By means of an iterative calculation the location of the previously drilled and cased borehole is determined. However, only a final approximate location of the existing well is obtained.

In EP-247672-A a method is disclosed for determining distances between adjacent boreholes. The method of this document is employed in case of a blowout in a previously drilled wellbore, whereby a so-called relief well is drilled, which intersects the blowing well at a selected depth so as to allow pumping of heavy liquid into the blowing well. In this method accurate magnetic polestrengths values of casing portions have to be known. As a result of complex calculation on Fourier Series of convoluted monopole- and dipole-field functions amplitude/wave number spectra are derived. Such spectra allow determination of the above distances. However, to be capable to apply this method and to obtain such spectra a large number of measurement data is necessary resulting in only mean distances.

Furthermore, from US 4,640,352 it is known to operate a couple of boreholes, the one used as a production well, the other as an injection well. The boreholes were substantially parallel and the problem addressed clearly concerned inducing an economically feasible production of oil from low permeable zones. However, from this document it is not clear how drilling and directing boreholes were carried out.

As to the present invention a quite different problem has to be solved. It will be clear that in the case of a couple of boreholes it may be advantageous to have all the directional data of the adjacent borehole available as soon as the new borehole is to be drilled.

However, it remains a problem how to control the direction of the borehole accurately and simultaneously to overcome the shortcomings and to avoid the complex operations of the methods as shown above.

It is an object of the invention to provide an improved method of creating a borehole in an earth formation, in a selected direction relative to an adjacent borehole formed in the earth formation.

It is another object of the invention to provide an improved system for creating a borehole in an earth formation, in a selected direction relative to an adjacent borehole formed in the earth formation.

The method according to the invention comprises:

- arranging electromagnetic source means in a first of said boreholes at a plurality of locations along the length thereof, said electromagnetic source means inducing an electromagnetic field extending into a second of said boreholes;
- arranging electromagnetic field measuring means at a selected depth $d_i$ in the second borehole, said measuring means being capable of measuring said electromagnetic field;
- operating the measuring means so as to measure said electromagnetic field;
- determining, from the measured electromagnetic field, components of the electromagnetic field including at least two components in directions substantially normal to the longitudinal axis of the first borehole; and
- determining from said at least two components a direction parameter indicative of the direction of the borehole relative to the adjacent borehole.

The two components of the electromagnetic field can be written as expressions being a function of the distance between depth $d_i$ in the second borehole, and the first borehole. This distance can be written in terms of its components along said directions substantially normal to the longitudinal axis of the first borehole. By combining the expressions for the two components of the electromagnetic field in a suitable manner, the components of the distance between the measuring means at depth $d_i$ and the first borehole can be calculated. By determining these components at various depths $d_i$ in the second borehole, the direction parameter can be calculated. It is to be understood that the electromagnetic field induced by the source means can have any suitable wavelength, and that a suitable electromagnetic field to be used in the invention forms a magnetic field induced by one or more permanent magnets.

The system according to the invention comprises:

- electromagnetic source means to be arranged in a first of said boreholes at a plurality of locations along the length thereof, said electromagnetic source means inducing an electromagnetic field extending into a second of said boreholes;
- electromagnetic field measuring means to be arranged at a selected depth $d_i$ in the second borehole, said measuring means being capable of measuring said electromagnetic field;
- means to operate the measuring means so as to measure said electromagnetic field;
- means to determine, from the measured electromagnetic field, components of the electromagnetic field including at least two components in directions substantially normal to the longitudinal axis of the first borehole; and
- means to determine from said at least two components a direction parameter indicative of the direction of the borehole relative to the adjacent borehole.

The borehole can be effectively created if the first borehole forms the adjacent borehole, and the second borehole forms the borehole which is being created.

Preferably said directions of the at least two components are substantially perpendicular to each other, and the direction parameter is determined by determining a ratio of said two components.

Determination of said ratio of the two components suitably comprises applying $B_{1,i}/B_{2,i} = s_{1,i}/s_{2,i}$, whereby $B_{1,i}$ and $B_{2,i}$ are the respective electromagnetic field strength components along said directions at depth $d_i$, and $s_{1,i}$ and $s_{2,i}$ are the respective components along said directions of the distance between the electromagnetic field measuring means and the first borehole.

Effective arrangement of the electromagnetic source means at said plurality of locations along the length of said borehole can be achieved by moving said source means through said borehole.

Advantageously the electromagnetic source means includes an electromagnetic coil.

The invention will now be described by way of example in more detail with reference to the accompanying drawings, wherein:

Figures 1A and 1B schematically show the orientations of conventionally used coordinate systems when drilling and directing boreholes, and
Figures 2A and 2B show exemplary measuring situations for determining vector components in two distinct planes within the conventional earth fixed coordinate system.

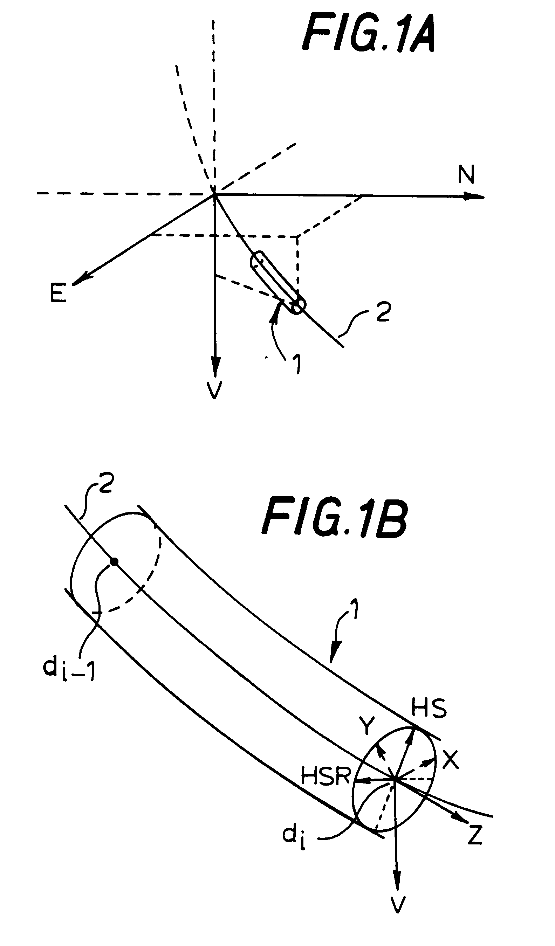

In figures 1A and 1B conventionally used coordinate frames or systems as used are shown. In figure 1A the earth fixed Cartesian reference frame NEV (North-East-Vertical) is presented wherein a part of a borehole 1 is indicated. The N-direction may be either the geographical one or the magnetic one. For every other place on earth differences between both frames are well defined. In figure 1B an enlarged view of the part of borehole 1 is shown. The borehole 1 is presented as a cylinder around a central or borehole axis 2. Generally, along this axis depth values are taken, often referred to as along hole depths. For a point i a corresponding depth $d_i$ is defined, commonly taken as the distance from the earth surface to said point i along the borehole axis 2. Thus, a sequence of depth values can be presented as $\ldots d_{i-2}$, $d_{i-1}$, $d_i$, $d_{i+1}$, $d_{i+2}$, $\ldots$ etc. In figure 1B exemplary $d_{i-1}$ and $d_i$ depths are shown.

For example for the along borehole depth $d_i$ relevant directions within two coordinate frames are shown. The vertical V is taken from the earth fixed NEV-frame as shown with respect to figure 1A. The Cartesian XYZ-frame is generally taken as fixed on a measuring apparatus placed in the borehole 1. In this frame Z is taken along the borehole axis 2 in the downhole direction and X and Y are taken correspondingly.

Furthermore, at depth $d_i$ the high-side (HS)- and high-side-right (HSR)-directions are shown which are well known to those skilled in the art. HS lies in the vertical plane through Z and V, the latter being in line with the gravity acceleration vector $\bar{g}$. HSR is perpendicular to Z and V and is consequently horizontal.

It may be clear to those skilled in the art that for the general case every other coordinate frame can be used if components can be taken mathematically adequately. Thus, generally two coordinate systems are involved. A first one, C, related to the first borehole and the predetermined direction as mentioned above, and a second D, related to the second borehole. In such frames positions are indicated with parameters s. For example a second borehole has its starting point at $s_0$ in C. For the general case $\bar{B}$-and $\bar{g}$-components in D are indicated with $B_{D,i}$ and $g_{D,i}$ when measured at depth $d_i$. More general, in the context of this application, when a variable is provided with subscript i, said variable is taken at depth $d_i$ in the borehole considered.

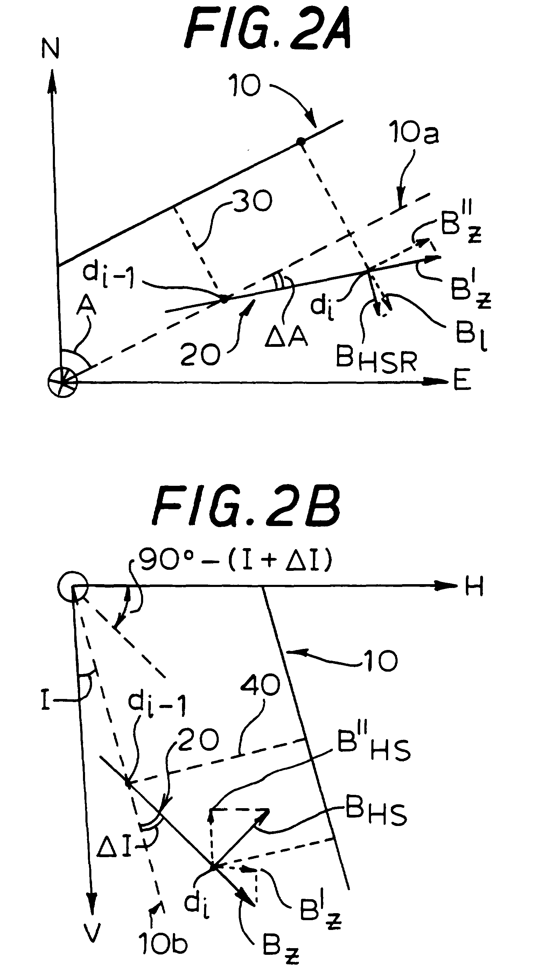

In figures 2A and 2B exemplary measuring situations for conventional coordinate frames as applied in the present invention are shown.

In figure 2A the NE-plane of the NEV-coordinate frame is presented. In the frame-origin the tail of the arrow of the V-vector which is pointing downwards from the NE-plane is faced. Orthogonal projections of a first borehole 10 and a second borehole 20 upon the NE-plane are shown.

The angle between the direction of the first borehole 10 and the N-direction is known as the azimuth-angle A. If for example the predetermined direction for the second borehole 20 is the parallel direction indicated as a dotted line 10a in the NE-plane, then in this figure 2A borehole 20 is deviating under a deviation angle $\Delta A$ from said direction. The distance between a point in the second borehole 20 and the first borehole 10 is called the lateral distance 30, 1, when taken in a horizontal plane.

In figure 2B a vertical section or vertical plane in the NEV-coordinate frame through V and through a vector H in the horizontal NE-plane is presented. In the frame-origin the tip of the arrow of the E-vector which is pointing up from said plane, indicated as HV-plane, is faced. Orthogonal projections of the first borehole 10 and the second borehole 20 upon the HV-plane are shown.

The angle between the direction of the first borehole 10 and the V-direction forms the inclination-angle I. If, for example, the predetermined direction of the second borehole 20 is the parallel direction, indicated as a dotted line 10b in the HV-plane, then in this figure 2B borehole 20 is deviating under a deviation angle $\Delta I$ from said direction slightly upwards.

The distance between a point in the second borehole 20 and the first borehole 10 is called the upward distance 40, u, when taken in a vertical plane.

As the selected direction into which the second borehole 20 has to be drilled, the direction parallel to borehole 10 is chosen. Consequently the orthogonal projections of said parallel direction within the NE-plane and the HV-plane, respectively 10a and 10b are parallel with the orthogonal projections of borehole 10. It may be clear to those skilled in the art that any selected direction can be chosen.

In order to arrive at the selected direction during drilling of the second borehole 20 adjacent to the first borehole 10 suitable measurements have to be made to carry out the necessary calculations and determinations and to control the drilling operations.

Since the first borehole 10 has been provided with magnetized casing portions having polestrengths adapted to be measured over the interborehole distance, magnetic field components $B_x$, $B_y$, $B_z$ of the magnetic field vector $\bar{B}$ can be measured from the second borehole by means of a set of magnetometers aligned along the X, Y and Z-axis of the above said XYZ-coordinate frame which is fixed to the measuring tool arranged within the second borehole 20. Said magnetic field components generally are composed of polestrength components and earth magnetic field components.

Furthermore, it is a well known technique to apply a set of accelerometers within a borehole measurement tool to measure the gravity acceleration components $g_x$, $g_y$, and $g_z$, of the gravity acceleration vector $\bar{g}$ to allow the determination of inclination data.

Surprisingly, it has appeared that, having only gravity acceleration components and magnetic field components, the latter including only non-calibrated polestrength values, according to the present invention in particular azimuth angles and inclination angles can be derived, allowing an accurate control operation as to the directional drilling operation of the second borehole. The following procedure has to be followed.

After having measured values of $B_{x_i}$, $B_{y_i}$, $B_{z_i}$, $g_{x_i}$, $g_{y_i}$, and $g_{z_i}$ at any depth $d_i$ inclination angles and azimuth angles of the second borehole 20 can be determined for example as indicated in US 4,163,324. In the present case the determined angles for the second borehole 20 are $(I + \Delta I)_i$ and $(A + \Delta A)_i$ at such depth $d_i$.

Having said angles and magnetic field components the following route is followed to arrive at $\Delta A_i$ - and $\Delta I_i$-values.

The inclination- and highside angles as obtained above allow to arrive at highside (HS)- and highside right (HSR)-components in a straight-forward way which is visualized in figure 1B. Thus, the magnetic field components to be handled are changed from $B_x$, $B_y$, and $B_z$ to $B_{HS}$, $B_{HSR}$ and $B_z$.

Since the drilling operations and the magnetic field measurements are clearly coupled to first borehole characteristics, further determination and calculation procedures are focused on vector components and interborehole distances closely related thereto. Consequently this means that, besides the angles mentioned above, components and distances in the upward and lateral directions with respect to the first borehole are determined. Said directions correspond respectively with the HS- and HSR-direction of the first borehole and they are directed along dashed lines 40 and 30 in figures 2B and 2A respectively.

For an arbitrary drilling direction for the second borehole 20 which direction may be close to the predetermined direction such as the parallel direction presented as 10a and 10b in figures 2A and 2B respectively, neither the $\Delta A$-direction in figure 2A, nor the $\Delta I$-direction in figure 2B will probably be in spatial alignment with the corresponding first borehole projection in the HV-plane in figure 2B or the NE-plane in figure 2A respectively. Therefore a first rotation over $(90° - (I + \Delta I))$ as presented in figure 2B is carried out in order to obtain components in the horizontal NE-plane thus providing a clear azimuthal reference.

Since $B_{HSR}$ lies in the NE-plane per se only $B_z$ and $B_{HS}$ as shown in figure 2B are subjected to the $(90° - (I + \Delta I))$ rotation, resulting in the following components,

$$B'_z = B_z \sin(I + \Delta I) + B_{HS}\cos(I + \Delta I) \tag{1},$$

and

$$B'_{HS} = - B_z \cos(I + \Delta I) + B_{HS}\sin(I + \Delta I) \tag{2}.$$

$B'_z$ and $B'_{HS}$ are also shown in figure 2B.

Now having been arrived in the NE-plane the new situation is sketched in figure 2A. As explained above $B_{HSR}$, already positioned in the horizontal plane, and $B'_z$ are shown whereas $B'_{HS}$ has to be thought of as pointing upward from this horizontal plane. In this NE-plane a further rotation over $\Delta A$ is carried out, i.e. from the HSR-direction of the second borehole to the HSR or lateral (I) direction of the first borehole.

Thus, the following components will result,

$$B''_z = B'_z \cos\Delta A - B_{HSR}\sin\Delta A \tag{3},$$

and

$$B'_{HSR} = B_I = B'_z \sin\Delta A + B_{HSR}\cos\Delta A \tag{4},$$

both components also being shown in figure 2A.

In a further step a clear inclinational reference is obtained. A rotation over (90° - I) is carried out in order to arrive at line 10b in figure 2B whereas the components obtained thus far are already in spatial alignment with the azimuth direction. This rotation applied on $B''_z$ and $B'_{HS}$ results in,

$$B'''_z = B''_z \sin I - B'_{HS}\cos I \tag{5},$$

and

$$B''_{HS} = B_u = B''_z \cos I + B'_{HS}\sin I \tag{6},$$

thus obtaining the component in the upward (u) direction.

In $B_I$ and $B_u$, (4) and (6) respectively, the initial $B_{HS}$, $B_{HSR}$, and $B_z$ can be substituted, giving,

$$B_I = [B_z \sin(I + \Delta I) + B_{HS}\cos(I + \Delta I)]\sin\Delta A + B_{HSR}\cos\Delta A \tag{7},$$

and

$$B_u = \{[B_z \sin(I + \Delta I) + B_{HS}\cos(I + \Delta I)]\cos\Delta A - B_{HSR}\sin\Delta A\}\cos I +$$

$$\{- B_z \cos(I + \Delta I) + B_{HS}\sin(I + \Delta I)\}\sin I \tag{8}.$$

In the present case only small deviations are assumed. For the further determinations this means that $\Delta A$ is small, and consequently the approximations $\cos \Delta A = 1$ and $\sin \Delta A = \Delta A$ are employed. Applying these approximations and well known basic trigonometrics the following results,

$$B_I = [B_z \sin(I + \Delta I) + B_{HS}\cos(I + \Delta I)]\Delta A + B_{HSR} \tag{9},$$

and

$$B_u = B_z \, sin\Delta I + B_{HS}cos\Delta I - B_{HSR}cosI\Delta A \qquad (10).$$

As usual the components measured, i.e. $B_x$, $B_y$, $B_z$, subsequently transferred to the $B_{HS}$, $B_{HSR}$, $B_z$-frame, and making up $B_u$ and $B_1$, include both the earth magnetic field $\bar{B}_E$ and the magnetic polestrength $\bar{B}_p$ of the casing portions in accordance with

$$\bar{B} = \bar{B}_p + \bar{B}_E \qquad (11).$$

In order to arrive at well defined polestrength components $B_{p,u}$, $B_{p,1}$ in the upward and lateral direction the measured components have to be corrected for the earth magnetic field $\bar{B}_E$.

Conventionally, the earth magnetic field is characterized by its components in the north and vertical direction, $B_N$ and $B_V$ respectively, which are known for most places on earth. Generally, by subjecting these $B_N$ and $B_V$ to well known rotations to the I-A-coordinate system the following components in the HS, HSR and Z-direction are obtained:

$$B_{E,HS} = - B_V sinI + B_N cosAcosI \qquad (12),$$

$$B_{E,HSR} = - B_N sinA \qquad (13),$$

and

$$B_{E,Z} = B_V cosI + B_N cosAsinI \qquad (14).$$

In particular the components in the upward (u, HS) and lateral (1, HSR) direction, respectively 12 and 13, can be combined easily with the above 1- and u- $\bar{B}$-field components, respectively 9 and 10, which are also obtained for the I-A coordinate system, to arrive at the above said well-defined polestrength components.

Thus, when employing

$$\bar{B}_p = \bar{B} - \bar{B}_E \qquad (11'),$$

the following polestrength components are obtained,

$$B_{p,u} = B_z sin\Delta I + B_{HS}cos\Delta I - B_{HSR}cosI\Delta A + B_V sinI - B_N cosIcosA \qquad (15),$$

and

$$B_{p,I} = \{B_z sin(I+\Delta I) + B_{HS}cos(I+\Delta I)\}\Delta A + B_{HSR} + B_N sinA \qquad (16).$$

As to the polestrengths of the casing portions of the first borehole the following is noted. In most cases the casing parts are magnetized before being arranged in the borehole to form the casing of a production well. As a result a sequence of magnetic poles, couples of which functioning as bar magnets, is obtained. Such a casing is adapted to be used as a mark for example when in case of a blowout a relief well has to be drilled. However, as set forth above, during arranging the casing parts in the borehole, rough operating conditions occur. Consequently the well defined casing magnetizations are distorted substantially. Moreover, the magnetic material is subjected to the earth magnetic field. Dependent on location and direction, either the material is magnetized per se, or the magnetization already applied is modified. In view of the foregoing it will be clear that in many cases real magnetization values of casing portions are not known.

Besides, the casing parts which are assumed to be coupled like bar magnets along a substantially straight line, allow the approximation as a sequence of magnetic monopoles which is well known in basic physics. This means that for each depth $d_i$ the lateral and upward polestrength field value can be expressed as,

$$B_{p,l_i} = \sum_{k=1}^{N} \frac{P_k}{4\pi} \frac{l_i}{[l_i^2 + u_i^2 + (z-z_k)^2]^{3/2}} \qquad (17),$$

and

$$B_{p,u_i} = \sum_{k=1}^{N} \frac{P_k}{4\pi} \frac{u_i}{[l_i^2 + u_i^2 + (z-z_k)^2]^{3/2}} \qquad (18),$$

$P_k$ being the magnetic polestrength at position $z_k$ along the first borehole, and $(z-z_k)$ being the distance between $z_k$ and z=0 with z-0 being the point of closest approach between the first borehole and the measuring tool in the second borehole.

In accordance with the invention the following formula results,

$$B_{p,l_i}/B_{p,u_i} = l_i/u_i \qquad (19).$$

Thus, this relation is independent from the magnetic polestrength values $P_k$.

Referring again to figures 2A and 2B for angles $\Delta A$ and $\Delta I$ the lateral and upward distance at depth $d_i$ can be written as,

$$l_i = l_{i-1} + (d_i - d_{i-1}) \cdot \Delta A \qquad (20),$$

and

$$u_i = u_{i-1} + (d_i - d_{i-1}) \cdot \sin\Delta I \qquad (21),$$

with $\Delta A$ small, and $l_{i-1}$ and $u_{i-1}$ being the lateral and upward distance at the previous measuring point $d_{i-1}$.

Rewriting (15) and (16) for depth $d_i$ in a simplified form as:

$$B_{p,u_i} = B_{u1} \cdot \Delta A + B_{u2} \qquad (15'),$$

and

$$B_{p,l_i} = B_{11} \cdot \Delta A + B_{12} \qquad (16'),$$

and employing (19) to (21), then the following result is obtained,

$$\Delta A_i = \frac{B_{u2}l_{i-1} - B_{12}u_i}{B_{11}u_i - B_{u1}l_{i-1} - B_{u2}(d_i - d_{i-1})} \qquad (22).$$

From the above it will be clear that all the directional data for the second borehole at $d_i$ can be arrived at now, since:

- $\Delta I$ is determined from inclination angles I and $(I + \Delta I)$, which angles can be found in a known manner using the accelerometers, and
- $\Delta A$ is determined as shown above.

In a next step of the present invention the directional data obtained as shown above have to be compared with the data of the predetermined direction. This means that the obtained $\Delta A$ and $\Delta I$ should not exceed predetermined ranges $\Delta A_0$ and $\Delta I_0$. Preferably $\Delta A_0$ and $\Delta I_0$ are less than 10°.

Dependent on said comparison, either the drilling operation can be continued in the direction followed thus far, or the drilling direction has to be corrected in lateral direction, upward direction, or both directions.

Instead of the above indicated coordinate systems C and D, any suitable set of coordinate systems can be used. For example only for C the conventional NEV-frame can be taken. Furthermore, separately, for D the XYZ-frame, or even cylindrical coordinates, can be taken. In the same way direction parameters $\alpha_i$ can be chosen, although I, A, HS, and HSR as explained above are the usual ones.

In a further embodiment the method of the present invention advantageously allows the determination of strength and direction of magnetizations of casing portions. Thus, substantial distortions and/or deviations in magnetization can provide useful information on casing conditions.

Moreover, if at starting the drilling operations the polestrengths are known, drilling operations can be carried out in close dependency to said strengths whereas the method of the invention advantageously allows a check procedure as to the directional data obtained.

If for some reason the selected direction of the second borehole is not parallel to that of the first borehole the same method as explained above can be applied. Again A- and I-angles are set for making up the selected direction, and by employing (19) the method of the present invention can be applied with great advantage. In that case one has to realize that the distance between the boreholes should not become too large because of the measurability of the polestrength.

In this field of technique it is well known that dependent on type of casing, polestrengths having a magnetic flux up to 18000 $\mu$Wb can be obtained allowing measuring magnetic flux densities as low as 2 $\mu$T. This means that lateral or upward distance preferably does not exceed about 30 m.

In a preferred embodiment of the present invention $I_i/u_i \leq 1$. Thus, consequences of errors in the determination of $\Delta A$ are minimized which can be seen from (19).

Furthermore the method of the present invention as explained above can be used for verifying direction and position of a second uncased borehole near a first borehole which has an accurately known position and which is provided with magnetized casing portions having polestrengths adapted to be measured from the first borehole. In this case the measuring while drilling is clearly substituted by measuring from a borehole already drilled.

Besides the above advantageously the method of the present invention as explained above can be employed for determining direction and position of a first cased borehole provided with magnetized casing positions having polestrengths adapted to be measured from a second uncased borehole having an accurately known position. For example, when the second borehole is accurately drilled by means of gyro drilling control, then the reverse way of operating can be applied.

Advantageously the method of the invention is employed in drilling couples of holes in shaly-sand layer formations which often necessitate injection of steam in order to arrive at desired production levels.

## Claims

1. A method of determining a direction of a borehole in an earth formation relative to an adjacent borehole formed in the earth formation, the method comprising:

   - arranging electromagnetic source means in a first of said boreholes at a plurality of locations along the length thereof, said electromagnetic source means inducing an electromagnetic field extending into a second of said boreholes;
   - arranging electromagnetic field measuring means at a selected depth $d_i$ in the second borehole, said measuring means being capable of measuring said electromagnetic field;
   - operating the measuring means so as to measure said electromagnetic field;
   - determining, from the measured electromagnetic field, components of the electromagnetic field; and
   - determining a direction parameter indicative of the direction of the borehole relative to the adjacent borehole, characterized in that said components of the electromagnetic field include at least two components in directions substantially normal to the longitudinal axis of the first borehole and that said direction parameter is determined from said at least two components.

2. The method of claim 1, wherein the first borehole forms the adjacent borehole, and the second borehole forms the borehole which is being created.

3. The method of claim 1 or 2, wherein said directions of the at least two components are substantially perpendicular to each other, and the direction parameter is determined by determining a ratio of said two components.

4. The method of claim 3, wherein said ratio of the two components is determined form $B_{1,i}/B_{2,i} = s_{1,i}/s_{2,i}$, whereby $B_{1,i}$ and $B_{2,i}$ are the respective electromagnetic field strength components along said directions at depth $d_i$, and $s_{1,i}$ and $s_{2,i}$ are the respective components along said directions of the distance between the electromagnetic field measuring means and the first borehole.

5. The method of any of claims 1-4, wherein the electromagnetic source means is located at said plurality of locations along the length of said borehole by moving said source means through said borehole.

6. The method of claim 5, wherein said electromagnetic source means includes an electromagnetic coil.

7. The method of any of claims 1-4, wherein said electromagnetic source means includes a casing installed in the first borehole, which casing has been magnetised at said plurality of locations along the length of the first borehole.

8. The method of any of claims 1-7, wherein the measured electromagnetic field is corrected for the earth's magnetic field in order to determine said components of the electromagnetic field induced by the electromagnetic source means.

9. The method of any of claims 1-8, wherein said direction parameter indicative of the direction of the borehole relative to the adjacent borehole is a difference between the azimuth angles of said boreholes.

10. The method of any of claims 1-9, wherein said borehole is created so as to extend substantially parallel to the adjacent borehole.

11. The method of any of claims 1-10, wherein said boreholes extend substantially in a horizontal plane.

12. The method of any of claims 1-11, wherein the step of determining said components of the electromagnetic field comprises determining components of the electromagnetic field in a Cartesian co-ordinate system XYZ, whereby Z is directed along the longitudinal axis of the second borehole.

13. The method of any of claims 1-12, wherein said direction parameter indicative of the direction of the borehole relative to the adjacent borehole is used to determine a direction in which said borehole is further drilled.

14. A system for determining a direction of a borehole in an earth formation relative to an adjacent borehole formed in the earth formation, the system comprising:

- electromagnetic source means to be arranged in a first of said boreholes at a plurality of locations along the length thereof, said electromagnetic source means inducing an electromagnetic field extending into a second of said boreholes;
- electromagnetic field measuring means to be arranged at a selected depth $d_i$ in the second borehole, said measuring means being capable of measuring said electromagnetic field;
- means to operate the measuring means so as to measure said electromagnetic field;
- means to determine, from the measured electromagnetic field, components of the electromagnetic field; and
- means to determine a direction parameter indicative of the direction of the borehole relative to the adjacent borehole,

characterized in that said components of the electromagnetic field include at least two components in directions substantially normal to the longitudinal axis of the first borehole and that said means to determine the direction parameter comprise means to determine the direction parameter from said at least two components.


**Patentansprüche**

1. Verfahren zum Bestimmen der Richtung eines Bohrloches in einer Erdformation bezüglich eines benachbarten, in der Erdformation ausgebildeten Bohrloches, welches Verfahren umfaßt:

- Anordnen elektromagnetischer Quellenmittel in einem ersten der genannten Bohrlöcher an mehreren Orten entlang dessen Länge, wobei die elektromagnetischen Quellenmittel ein elektromagnetisches Feld erzeugen, das sich in ein zweites der genannten Bohrlöcher hineinerstreckt;
- Anordnen elektromagnetischer Feldmeßmitiell in einer vorgewählten Tiefe $d_i$ im zweiten Bohrloch, welche preßmittel in der Lage sind, das genannte elektromagnetische Feld zu messen;
- Betreiben der Meßmittel, um das genannte elektromagnetische Feld zu messen;
- Bestimmen, u.zw. aus dem gemessenen elektromagnetischen Feld, von Komponenten des elektromagnetischen Feldes; und
- Bestimmen eines Richtungsparameters, der für die Richtung des Bohrloches relativ zu dem benachbarten Bohrloch kennzeichnend ist, dadurch gekennzeichnet, daß die genannten Komponenten des elektromagnetischen Feldes zumindest zwei Komponenten in Richtungen im wesentlichen normal zur Längsachse des ersten Bohrloches umfassen, und daß der genannte Richtungsparameter aus den genannten zumindest zwei Komponenten bestimmt wird.

2. Verfahren nach Anspruch 1, bei welchem das erste Bohrloch das benachbarte Bohrloch bildet und das zweite Bohrloch das Bohrloch bildet, welches soeben geschaffen wird.

3. Verfahren nach Anspruch 1 oder 2, bei welchem die Richtungen der zumindest zwei Komponenten im wesentlichen senkrecht zueinander sind und der Richtungsparameter durch Bestimmen eines Verhältnisses dieser beiden Komponenten bestimmt wird.

4. Verfahren nach Anspruch 3, bei weichem das genannte Verhältnis der beiden Komponenten aus $B_{1,i}/B_{2,i} = s_{1,i}/s_{2,i}$ bestimmt wird, wobei $B_{1,i}$ und $B_{2,i}$ die jeweiligen elektromagnetischen Feldstärkekomponenten entlang der genannten Richtungen in der Tiefe $d_i$, und $s_{1,i}$ und $s_{2,i}$ die jeweiligen elektromagnetischen Feldstärkekomponenten entlang der genannten Richtungen des Abstandes zwischen den elektromagnetischen Feldmeßmitteln und dem ersten Bohrloch sind.

5. Verfahren nach einem der Ansprüche 1-4, bei welchem die elektromagnetischen Quellenmittel an den genannten mehreren Orten entlang der Länge des Bohrloches angeordnet werden, indem die Quellenmittel durch das Bohrloch hindurchbewegt werden.

6. Verfahren nach Anspruch 5, bei welchem die elektromagnetischen Quellenmittel eine elektromagnetische Spule aufweisen.

7. Verfahren nach einem der Ansprüche 1-4, bei welchem die elektromagnetischen Quellenmittel eine im ersten Bohrloch installierte Einfassung aufweisen, welche Einfassung an der genannten mehreren Orten entlang der Länge des ersten Bohrloches magnetisiert worden ist.

8. Verfahren nach einem der Ansprüche 1-7, bei welchem das gemessene elektromagnetische Feld um das Erdmagnetfeld korrigiert wird, um die genannten Komponenten des elektromagnetischen Feldes zu bestimmen, welche durch die elektromagnetischen Quellenmittel erzeugt werden.

9. Verfahren nach einem der Ansprüche 1-8, bei welchem der für die Richtung des Bohrloches relativ zu dem benachbarten Bohrloch kennzeichnende Richtungsparameter eine Differenz zwischen den Azimutwinkeln der Bohrlöcher ist.

10. Verfahren nach einem der Ansprüche 1-9, bei welchem das Bohrloch so erzeugt wird, daß es sich im wesentlichen parallel zu dem benachbarten Bohrloch erstreckt.

11. Verfahren nach einem der Ansprüche 1-10, bei welchem die Bohrlöcher sich im wesentlichen in einer horizontalen Ebene erstrecken.

12. Verfahren nach einem der Ansprüche 1-11, bei welchem der Schritt des Bestimmens der genannten Komponenten des elektromagnetischen Feldes das Bestimmen der Komponenten des elektromagnetischen Feldes in einem kartesischen Koordinatensystem XYZ umfaßt, wobei Z entlang der Längsachse des zweiten Bohrloches gerichtet ist.

13. Verfahren nach einem der Ansprüche 1-12, bei welchem der die Richtung des Bohrloches relativ zu dem benachbarten Bohrloch kennzeichnende Richtungsparameter dazu verwendet wird, eine Richtung zu bestimmen, in welcher das Bohrloch weitergebohrt wird.

14. System zur Bestimmung der Richtung eines Bohrloches in einer Erdformation relativ zu einem benachbarten, in der Erdformation ausgebildeten Bohrloch, welches System aufweist:

- elektromagnetische Quellenmittel zur Anordnung in einem ersten der genannten Bohrlöcher an mehreren Orten entlang dessen Länge, welche elektromagnetischen Quellenmittel ein elektromagnetisches Feld erzeugen, das sich in ein zweites der genannten Bohrlöcher hineinerstreckt;
- elektromagnetische Feldmeßmittel zur Anordnung in einer ausgewählten Tiefe $d_i$ im zweiten Bohrloch, welche Meßmittel in der Lage sind, das genannte elektromagnetische Feld zu messen;
- Mittel zum Betreiben der Meßmittel, um das genannte elektromagnetische Feld zu messen;
- Mittel zum Bestimmen, u.zw. aus dem gemessenen elektromagnetischen Feld, von Komponenten des elektromagnetischen Feldes; und
- Mittel zum Bestimmen eines Richtungsparameters, der für die Richtung des Bohrloches relativ zu dem benachbarten Bohrloch kennzeichnend ist, dadurch gekennzeichnet, daß die genannten Komponenten des elektromagnetischen Feldes zumindest zwei Komponenten in Richtungen im wesentlichen normal zur Längsachse des ersten Bohrloches umfassen, und daß die genannten Mittel zur Bestimmung des Richtungsparameters Mittel zur Bestimmung des Richtungsparameters aus den genannten zumindest zwei Komponenten umfassen.

**Revendications**

1. Procédé de détermination de la direction d'un trou de forage dans une formation de terrain par rapport à un trou de forage voisin formé dans la formation de terrain, le procédé comportant les étapes consistant à:

- agencer un moyen de source électromagnétique dans un premier desdits trous de forage, en plusieurs emplacements suivant la longueur de ce demier, ledit moyen de source électromagnétique induisant un champ magnétique s'étendant dans un second desdits trous de forage;
- agencer un moyen de mesure du champ électromagnétique à une profondeur sélectionnée $d_i$ dans le deuxième trou de forage, ledit moyen de mesure étant capable de mesurer ledit champ électromagnétique;
- actionner le moyen de mesure de manière à mesurer ledit champ électromagnétique;
- déterminer à partir du champ électromagnétique mesuré des composantes du champ électromagnétique; et
- déterminer un paramètre de direction indicatif de la direction du trou de forage par rapport au trou de forage voisin,

caractérisé en ce que
lesdites composantes du champ électromagnétique comprennent au moins deux composantes dans des directions essentiellement normales à l'axe longitudinal du premier trou de forage, et en ce que ledit paramètre de direction est déterminé à partir desdites deux composantes au moins présentes.

2. Procédé selon la revendication 1, dans lequel le premier trou de forage forme le trou de forage voisin, et le deuxième trou de forage forme le trou de forage qui est créé.

3. Procédé selon les revendications 1 ou 2, dans lequel lesdites directions des deux composantes au moins présentes sont essentiellement perpendiculaires l'une à l'autre, et le paramètre de direction est déterminé en déterminant un rapport entre lesdites deux composantes.

4. Procédé selon la revendication 3, dans lequel ledit rapport entre les deux composantes est déterminé à partir de $B_{1,i}/B_{2,i} = s_{1,i}/s_{2,i}$, dans lequel $B_{1,i}$ et $B_{2,i}$ sont les composantes respectives de l'intensité du champ électromagnétique le long desdites directions à la profondeur $d_i$, et $s_{1,i}$ et $s_{2,i}$ sont les composantes respectives le long desdites directions, de la distance entre le moyen de mesure du champ électromagnétique et le premier trou de forage.

5. Procédé selon l'une quelconque des revendications 1 à 4, dans lequel le moyen de source électromagnétique est disposé en lesdits plusieurs emplacements le long de la longueur desdits trous de forage en déplaçant ledit moyen de source dans ledit trou de forage.

6. Procédé selon la revendication 5, dans lequel ledit moyen de source électromagnétique comporte un bobinage électromagnétique.

**7.** Procédé selon l'une quelconque des revendications 1 à 4, dans lequel ledit moyen de source électromagnétique comporte un tubage installé dans le premier trou de forage, lequel tubage a été magnétisé en lesdits plusieurs emplacements le long de la longueur du premier trou de forage.

**8.** Procédé selon l'une quelconque des revendications 1 à 7, dans lequel ledit champ électromagnétique mesuré est corrigé pour le champ magnétique terrestre en vue de déterminer lesdites composantes du champ électromagnétique induit par le moyen de source électromagnétique.

**9.** Procédé selon l'une quelconque des revendications 1 à 8, dans lequel ledit paramètre de direction indicatif de la direction du trou de forage par rapport au trou de forage voisin est une différence entre les angles d'azimut desdits trous de forage.

**10.** Procédé selon l'une quelconque des revendications 1 à 9, dans lequel ledit trou de forage est créé de manière à s'étendre essentiellement en parallèle au trou de forage voisin.

**11.** Procédé selon l'une quelconque des revendications 1 à 10, dans lequel lesdits trous de forage s'étendent essentiellement dans un plan horizontal.

**12.** Procédé selon l'une quelconque des revendications 1 à 11, dans lequel l'étape consistant à déterminer lesdites composantes du champ électromagnétique comporte la détermination de composantes du champ électromagnétique dans un système de coordonnées cartésiennes XYZ, Z étant dirigé suivant l'axe longitudinal du deuxième trou de forage.

**13.** Procédé selon l'une quelconque des revendications 1 à 12, dans lequel ledit paramètre de direction indicatif de la direction du trou de forage par rapport au trou de forage voisin est utilisé pour déterminer une direction dans laquelle ledit trou de forage continue d'être foré.

**14.** Système de détermination de la direction d'un trou de forage dans une formation de terrain par rapport à un trou de forage voisin formé dans la formation de terrain, le système comportant:

- un moyen de source électromagnétique à agencer dans un premier desdits trous de forage, en plusieurs emplacements suivant la longueur de ce demier, ledit moyen de source électromagnétique induisant un champ électromagnétique s'étendant dans un deuxième desdits trous de forage;
- un moyen de mesure du champ électromagnétique, à agencer à une profondeur $d_i$ sélectionnée dans le deuxième trou de forage, ledit moyen de mesure étant capable de mesurer ledit champ électromagnétique;
- un moyen pour actionner le moyen de mesure de manière à mesurer ledit champ électromagnétique;
- un moyen pour déterminer à partir du champ électromagnétique mesuré des composantes du champ électromagnétique; et
- un moyen pour déterminer un paramètre de direction indicatif de la direction du trou de forage par rapport au trou de forage voisin,

caractérisé en ce que
lesdites composantes du champ électromagnétique comprennent au moins deux composantes dans des directions essentiellement perpendiculaires à l'axe longitudinal du premier trou de forage, et en ce que ledit moyen pour déterminer le paramètre de direction comprend un moyen pour déterminer le paramètre de direction à partir des deux composantes au moins présentes.

FIG.1A

FIG.1B

# FIG.2A

# FIG.2B